# EUROPEAN PATENT SPECIFICATION

(11) **EP 1 926 104 B1**
(45) Date of publication and mention of the grant of the patent: **29.06.2016**
(21) Application number: 07121341.7
(22) Date of filing: 22.11.2007
(51) Int. Cl.: G11B 27/30, H04N 7/24, H04N 5/76

(54) **Encoding device, decoding device, recording device, audio/video data transmission system**
Kodierungsvorrichtung, Dekodierungsvorrichtung, Aufzeichnungsvorrichtung und System zur Übertragung von Audio- und Videodaten
Dispositif de codage, dispositif de decodage, dispositif d'enregistrement, systeme de diffusion de donnees audio video

(30) Priority: 27.11.2006 FR 0655129
(43) Date of publication of application: 28.05.2008
(73) Proprietor: Thomson Licensing, 92130 Issy-les-Moulineaux (FR)
(72) Inventor: Fabre, Sylvain, 92648, BOULOGNE CEDEX (FR); Sochard, Régis, 92648, BOULOGNE CEDEX (FR); Fraleu, Sébastien, 92648, BOULOGNE CEDEX (FR)
(74) Representative: Le Dantec, Claude

(56) References cited:
- WO-A1-2008/046243
- US-A1- 2005 031 308
- US-A1- 2005 193 408
- THOMAS WIEGAND: "Text of final committee draft of joint video specification (ITU-T Rec. H.264 ISO/IEC 14496-10 AVC" INTERNATIONAL ORGANISATION FOR STANDARDISATION ISO/IEC JTC1/SC29/WG11 CODING OF MOVING PICTURES AND AUDIO MPEG02/N4920, ANNEX D SUPPLEMENTAL ENHANCEMENT INFORMATION, July 2002 (2002-07), pages 169-182, XP002436201

## Description

The invention relates to an encoding device, a decoding device, a transmission system and a device for recording audio/video data.

The invention relates more particularly to the chaptering of the audio-visual programmes.

The functionality currently offered by DVD players to access the chapters of the recorded programme makes it convenient to browse through a programme without groping through the programme in search of particular moments.

This functionality is currently not present for programmes that can be received by broadcast on a television for example and when recording such programmes it is then impossible to have this chaptering. This chaptering is also inaccessible in the functionalities of PVRs (personal video recorders).

US 2005/031308 discloses a device according to the preamble of claim 1.

The invention proposes to respond to this need for chaptering by using fields defined in the encoding standards to convey chaptering information.

Accordingly, the invention proposes a device for encoding video data comprising means for encoding the images in groups of data according to the H. 264 standard. According to the invention, the device comprises means for inserting, into the encoded data groups, a message comprising parameters representative of the chaptering of the data, said message being of the Supplemental Enhancement Information type.

The H.264 compression standard is a standard that is in the process of becoming widely used in video encoding and recording devices. It has a type of message called the Supplemental Enhancement Information (SEI) that makes it possible to transmit information relating to the encoding. The inventors realized that such messages could also be used for other purposes than data encoding and propose the use of such messages for encoding chaptering information; such messages are ignored by the decoders, not implementing them even if they are generated by the encoder from which the video data originate.

According to a preferred embodiment, the message of the Supplemental Enhancement Information type comprises at least one item of information chosen from
- the duration of the chapter in bytes,
- the start time of a chapter relative to the start of the video data,
and any combination of this information.

According to a preferred embodiment, the message of the Supplemental Enhancement Information type comprises information relating to the title of the chapter.

According to a preferred embodiment, the said parameters representative of the chaptering information also comprise information relating to the audio/video data chosen from
- the actors of the film when the audio/video content is representative of a film,
- the director when the audio/video content is representative of a film,
- a synopsis of the chapter,
and any combination of this information.

The invention also relates to a system of transmitting audio video data comprising an encoding device according to the invention and means for transmitting encoded audio/video data with the chaptering information.

According to another aspect, the invention relates to an audio/video data recording device comprising means for encoding the audio/video data intended to be recorded. According to the invention, the recording device comprises
- means for generating or detecting chaptering information based on the audio/video data before encoding and relating to these audio/video data,
- means for encoding this chaptering information in messages associated with the audio/video data,
- means for recording the encoded data, comprising the data packets and the messages relating to the associated chaptering information, in a storage means.

According to a preferred embodiment, the means for encoding the audio video information comply with the H.264 compression standard, the associated messages being messages of the Supplemental Enhancement Information type.

According to another aspect, the invention also relates to a video data decoding device comprising means for decoding the images. According to the invention, the decoding device comprises means for extracting chaptering information from the data.

Advantageously, the recording device comprises means for decoding the video information recorded in the storage means and means for transmitting the video information to display means.

The invention will be better understood and illustrated by means of advantageous exemplary embodiments and implementations, that are in no way limiting, with reference to the appended figures in which:
- Figure 1 represents a system implementing the invention,
- Figure 2 represents an encoding device implementing a preferred embodiment of the invention,
- Figure 3 represents a decoding device implementing a preferred embodiment of the invention,
- Figure 4 represents a device of the personal audio/video data recorder type implementing a preferred embodiment of the invention.

The various embodiments of the invention may be realized as software, hardware or a combination of these various techniques. For example, in some cases, the invention may be supplied as a computer program product, or software, which may comprise a computer-readable apparatus or medium having instructions recorded for executing the method according to the invention. In other embodiments, the invention may be effected as hardware containing the wired logic for producing the various means of the invention or else as a combination of software means and hardware means.

The system comprises image processing means 1 whose output is connected to an encoder 2. The output of the encoder 2 is connected to transmission means 3.

The image processing means 1 receive as an input audio/video data originating directly from a movie camera or originating from post-production means and therefore ready to be encoded for transmission.

The image processing means 1 analyse the video content in order to extract the structure therefrom. In this manner, they index the video in order to obtain therefrom a breakdown into sub-units, for example chapters. Such a breakdown into chapters of the video is carried out by a prior breakdown into plans. Such methods are known to those skilled in the art. It is also possible for the director, during post-production, also to indicate the chaptering data and transmit them to the image processing means using for example time labels that indicate at which moment it is possible to detect a change of chapter and also transmitting the title of each chapter. The transmitted time information is either a duration for each chapter, a sort of absolute value, or else a relative value relating to the start of the video.

It is also possible to decide that a chapter is independent of the data content and that it corresponds only to a duration of the video, for example a chapter may be generated every 10 minutes.

The image processing module supplies the encoder 2 with the video data as it receives them as it received them from the image processing means 1 and the associated chaptering information, corresponding therefore to the title of each chapter and the duration of each chapter.

The encoding means 2 are encoding means complying with the H.264 standard.

The encoding means 2 insert the chaptering information into SEI (Supplemental Enhancement Information) messages.

The table below illustrates the payload data portion of an SEI message, using a type 6 payload data type, corresponding in the H.264 standard to payload data of the "user_data_unregistered" type, represented in the table below.
- the 128-bit word "uuid_iso_iec_11578" indicates the message type to the decoder during the decoding phase. The H.264 standard specifies a certain number of values for this word according to its meaning. One of these values indicates that it is a message of the "user_data_payload" type.
- the "user_data_payload_byte" word is an 8-bit word forming a portion of the SEI message. These 8 bits are used to encode the data relating to proprietary applications and in particular here for encoding the data relating to the invention as encoded below.

**Table 1**

| user_data_unregistered(payloadSize) { | **C** | **Descriptor** |
|---|---|---|
| **uuid_iso_iec_11578** | 5 | u(128) |
| for(i = 16; i < payloadSize; i++) | | |
| **user_data_payload_byte** | 5 | b(8) |
| } | | |

In the preferred embodiment, the payload data size is equal to 17 bytes, 16 being reserved for the UUID and 1 for the data relating to the invention.

**Table 2**

| | |
|---|---|
| **sequence**_**id** | u(8) |
| **title_size** | u(8) |
| for(i = 0; i < title_size; i++) | u(8) |
| **title_name** | u(8) |
| **title_info_size** | u(16) |
| for(i = 0; i < title_info_size; i++) | u(8) |
| **title_info** | u(8) |

where:
- sequence_id: this byte refers to the sequence_id of the SPS (Sequence Parameter Set) to be used. The chaptering SEI message must be sent in the datastream before the SPS bearing the same sequence_id.
- title_size: this byte indicates the size of the chapter title in bytes. It may also indicate the start time of the chapter relative to the start of the video data. It may also include both items of information.
- title_name: a character string giving the name of the chapter to be used (maximum 255 characters).
- title_info_size: a 16-bit word indicating the size of the additional information and for example a summary of the chapter.
- title_info: a character string giving additional details of the chapter (maximum 65535 characters).

The encoder 2 encodes the video data in H.264 format and inserts the SEI messages comprising the chaptering data in the data groups.

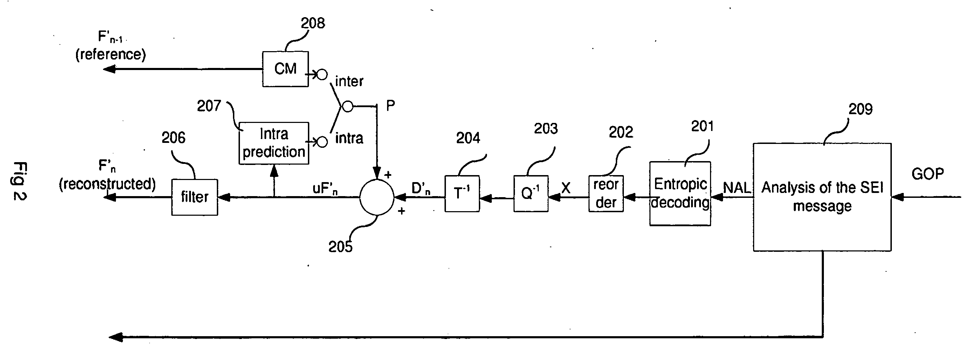

Figure 2 represents an encoder 2 according to the preferred embodiment of the invention.

A current frame Fₙ is presented at the input of the encoder in order to be encoded therein. This frame is encoded in the form of sections, that is to say that it is divided into sub-units that each contain a certain number of macroblocks corresponding to groups of 16*16 pixels. Each macroblock is encoded in intra or intermode. Whether it is in intramode or intermode, a macroblock is encoded based on a reconstructed frame. A module 109 decides on the intramode encoding of the current image according to the content of the image. In intramode, P (shown in Figure 2) consists of samples of the current frame Fn that have previously been encoded, decoded and reconstructed (uF'n in Figure 2, u meaning unfiltered). In intermode, P is made up from an estimate of movement based on one or more frames F'ₙ₋₁.

A movement estimation module 101 establishes an estimate of movement between the current frame Fn and at least one previous frame F'n-1. From this movement estimate, a movement compensation module 102 produces a frame P when the current image Fn is to be encoded in intermode.

A subtractor 103 produces a signal Dn, the difference between the image Fn to be encoded and the image P. Then this image is converted by a DCT conversion in a module 104. The converted image is then quantized by a quantization module 105. Then, the images are reorganized by a module 111. An entropic encoding module 112 of the CABAC (Context-based Adaptive Binary Arithmetic Coding) type then encodes each image.

Modules 106 and 107 respectively for inverse quantization and conversion make it possible to reconstitute a difference D'n after conversion and quantization then inverse quantization and inverse conversion.

When the image is encoded in intramode, according to the module 109, an intra prediction module 108 encodes the image. An image uF'n is obtained at the output of an adder 114, as the sum of the signal D'n and of the signal P. This module 108 also receives at the input the unfiltered reconstituted image F'n.

A filtering module 110 makes it possible to obtain the filtered reconstructed image F'n from the image uF'n.

The entropic decoding module 112 transmits the encoded sections encapsulated in units of the NAL type. The NALs contain, in addition to the sections, information relating to the headers for example. The NAL-type units are transmitted to a module 113. The module 113 inserts an SEI message before transmission of the various encoded image sections to a transmission network.

The inserted SEI message complies with the SEI message described previously and illustrated in table 2.

The datastream thus constituted of encoded payload data and encoded SEI messages is transmitted to transmission means 3 for transmission to users.

The transmission means may be of different types depending on the transmission medium. The data may be transmitted by satellite, by Internet, or also by cable.

The transmission means 3 therefore format the data according to the medium, in a-conventional manner known to those skilled in the art.

The data are then received by the user, either via a modem, or via a conventional receiving antenna and a tuner, or via the cable. The data are then transmitted, after having been demodulated or otherwise processed depending on the type of reception, to a decoder 4 when they are intended to be viewed directly. Otherwise, if they are intended for recording, they are recorded in an encoded manner in order to reduce the memory space necessary for recording them.

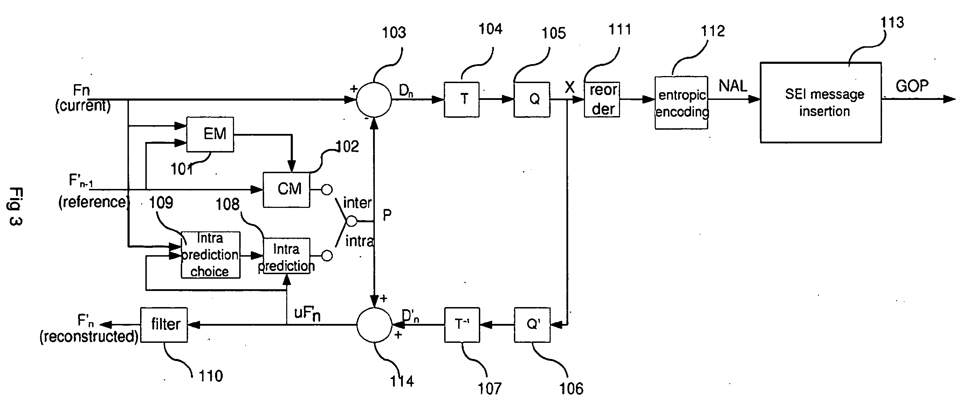

Figure 3 represents a decoder 4 according to a preferred embodiment of the invention.

A module 209 receives the SEI messages at the input. It extracts the various SEI messages. The NALs of payload data are transmitted to an entropic decoding module 201.

Then, the data are transmitted to a reordering module 202 in order to obtain a set of coefficients. These coefficients are then subjected to an inverse quantization in the module 203 and an inverse DCT conversion in the module 204 at the output of which the D'n macroblocks are obtained, D'n being a deformed version of Dn. A predictive block R is added to D'n, by an adder 205, to reconstruct a macroblock uF'n. The block P is obtained after movement compensation, carried out by a module 208, of the preceding decoded frame, when encoding is in intermode or after intra prediction of the macroblock uF'n, by a module 207, when encoding is in intramode. A filter 206 is applied to the signal uF'n to reduce the effects of distortion and the reconstructed frame F'n is created from a series of macroblocks.

The SEI messages and the payload data at the output of the decoder 4 are transmitted to processing means 5 to be used.

The processing means 5 are controlled by means of the processor type. They make it possible to format the data depending on their destination. One of the destinations of these data may be display, the other may be storage.

When the data are intended for display on a display device 6, of the television type for example, the chaptering information originating from the SEI messages is reformatted to be inlaid on the screen. In addition to the chaptering information, additional information, transmitted in the title_info field is also displayed. This information may relate to the transmitted audio video document such as the director, the running time, the actors, the year filmed, etc.

The chaptering information and the additional information is displayed on the screen in the form of a strip at the top or bottom of the screen. It may also be masked at the user's request thanks to an appropriate user interface.

The user may browse in the document chapter by chapter thanks to an appropriate user interface, a remote control or a direct selection on the screen by clicking on various chapters for example.

When the data are intended for recording, they are transmitted to recording means 7.

The recording means 7 are responsible for formatting the received data if necessary in order to transmit them to the storage means. The recording means 7 are controlled by a processor (not shown) and a file management system that determines the location of the data in the storage means 8. In a preferred manner, the storage means 8 are of the hard disk type but they may also be of the digital versatile disk (DVD) type, memory (USB key) for example, memory card, Blu-ray disk, etc., or any optical or magnetic storage means.

The recording means driven by the file management system record the audio/video data and their chaptering information in memory spaces that may or may not be contiguous, the important thing being the ability to restore the chaptering information when restoring the audio/video data when the data is read in the storage means. The manner of storing the chaptering information with the audio/video data depends on the application and the recording device.

When the recorded data in the storage means are read in order to be viewed on the display device 6, the data are read on the hard disk 8 by the recording means 7 and transmitted to the decoder 4. They then follow the same path as the data received from the transmission network and intended for viewing without prior recording.

In a preferred manner, the decoding means 4, the processing means 5, the recording means 7 and the storage means 8 form part of the same apparatus, and typically a personal video recorder known as the PVR.

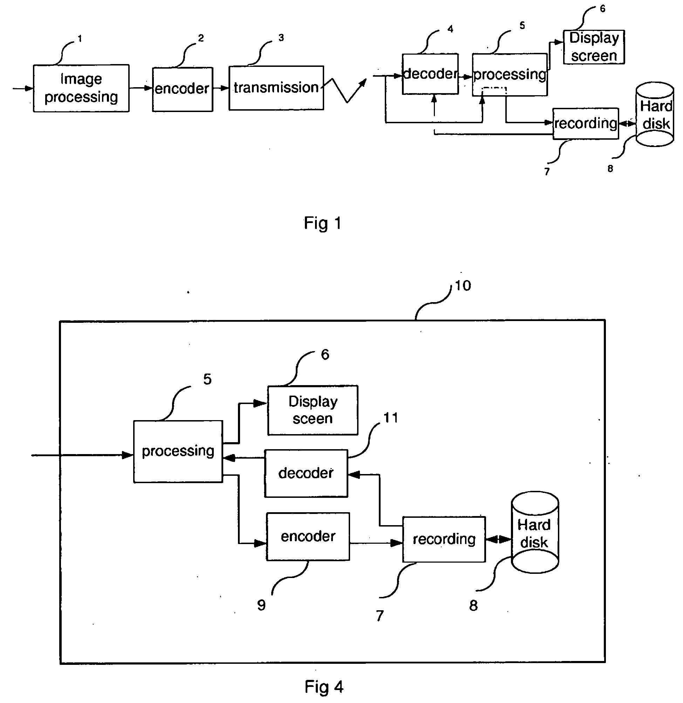

Figure 4 represents a device 10 of the personal video recorder (PVR) type.

This personal video recorder receives data that are not compressed or that are compressed according to a mode other than the H.264 compression standard.

The processing means 5 receive at the input data coming from a transmitter, by means of at least one communication/transmission device and for example via satellite. The data may also be received via cable, via the Internet.

The processing means 5 transmit the audio/video data to the display means 6, as in a conventional personal video recorder.

The processing means 5 also transmit the audio/video data to an encoder 9 when a user has requested the recording of the data received on the hard disk 8.

When the data are intended for recording, they are compressed so as.to take up less space on the hard disk and according to the preferred embodiment, the data are encoded according to the H.264 standard.

The data received at the input of the processing means 5 are data including chaptering information, these data being for example transmitted in a datastream of the DVB type.

In other embodiments, the chaptering information is created in the PVR. Accordingly, the PVR comprises image processing means capable of extracting a breakdown of the video into plans, in order to define chapters. The image processing means may also decide on an arbitrary division into chapters as mentioned above by dividing the video into time sections (for example 10-minute sections), with no regard for the real content.

The chaptering information is inserted into the SEI messages by the encoder 9 in the same way as they were by the encoder 2 of Figure 1.

During a playback of the data recorded on the hard disk 8, the data are read by the recording means 7 and transmitted to a decoder 11. The decoder 11 corresponds to the decoder described with reference to Figure 3. It extracts the chaptering information inserted into the SEI messages and transmits the video data to be displayed and the chaptering information to the processing means 5 that format the data for display and the chaptering information.

More particularly, in the context of a personal video recorder (PVR), the user, when reading media such as DVDs, is used to having chaptering information relating to the film that he is going to view. On the other hand, when he records programmes that he receives from a transmitter and that he records, he does not have such a chaptering functionality. The invention therefore advantageously makes it possible to incorporate such information in the video datastream by adding, in the PVR, means for creating this chaptering information so that it is encoded with the video datastream during the encoding of the datastream. This allows a simple storage of the chaptering data with the video data and a simple decoding during the reading of the hard disk or more generally of the storage means, which may also be a DVD.

## Claims

1. Audio/video data encoding device comprising
- means (2, 11) for encoding the images in data groups according to a video coding standard,
- means for inserting, into the encoded data groups, a message comprising parameters representative of the chaptering of the data.
**Characterized in that** said message is a message of the Supplemental Enhancement Information type.

2. Device according to Claim 2, **characterized in that** the message of the Supplemental Enhancement Information type comprises at least one item of information chosen from
- the duration of the chapter in bytes,
- the start time of a chapter relative to the start of the video data,
and any combination of this information.

3. Device according to claim 1 **characterized in that** the message of the Supplemental Enhancement Information type comprises information relating to the title of the chapter.

4. Device according to any one of the preceding claims, **characterized in that** the said parameters representative of the chaptering information also comprise information relating to the video data chosen from
- the actors of the film when the video content is representative of a film,
- the director when the video content is representative of a film,
- a synopsis of the chapter,
and any combination of this information.

5. System of transmitting audio/video data comprising an encoding device (2) according to Claims 1 to 5 and means (3) for transmitting encoded audio/video data with the chaptering information.

6. Use of an encoding device according to Claim 1 for encoding data intended to be recorded on a recording medium, the encoded data to be recorded comprising the data packets and the messages relating to the associated chaptering information.

7. Recording device (10) according comprising an encoding device according to claim 1.

8. Recording device (10) according to one of Claim 7, **characterized in that** it comprises means (11) for decoding video information recorded in the storage means (8) and means (5) for transmitting the video information to display means (6).

9. Video data decoding device (4, 11) comprising means for decoding the images encoded with the encoding device of claim 1, **characterized in that** it comprises means for extracting from the data a Supplemental Enhancement Information message comprising parameters representative of the chaptering information.

## Patentansprüche

1. Audio/Video-Daten-Codierungsvorrichtung, die umfasst:
- Mittel (2, 11) zum Codieren der Bilder in Datengruppen in Übereinstimmung mit der Coding Videonorm,
- Mittel zum Einfügen einer Nachricht, die Parameter umfasst, die die Kapiteleinteilung der Daten repräsentieren, in die codierten Datengruppen,
**dadurch gekennzeichnet, dass** die Nachricht eine Nachricht des Supplemental-Enhancement-Information-Typs ist.

2. Vorrichtung nach Anspruch 1, **dadurch gekennzeichnet, dass** die Nachricht des Supplemental-Enhancement-Information-Typs mindestens eine Informationseinheit umfasst, die gewählt ist aus:
- der Dauer des Kapitels in Bytes,
- der Anfangszeit eines Kapitels relativ zu dem Anfang der Videodaten,
und irgendeiner Kombination dieser Informationen.

3. Vorrichtung nach Anspruch 1, **dadurch gekennzeichnet, dass** die Nachricht des Supplemental-Enhancement-Information-Typs Informationen umfasst, die sich auf den Titel des Kapitels beziehen.

4. Vorrichtung nach einem der vorhergehenden Ansprüche, **dadurch gekennzeichnet, dass** die Parameter, die die Kapiteleinteilungsinformationen repräsentieren, außerdem Informationen umfassen, die sich auf die Videodaten beziehen, die gewählt sind aus:
- den Schauspielern des Films, wenn der Videoinhalt einen Film repräsentiert,
- den Regisseur, wenn der Videoinhalt einen Film repräsentiert,
- eine Zusammenfassung des Kapitels,
und irgendeine Kombination dieser Informationen.

5. System zum Übertragen von Audio/Video-Daten, wobei das System eine Codierungsvorrichtung (2) nach Anspruch 1 bis 4 und Mittel (3) zum Übertragen codierter Audio/Video-Daten mit den Kapiteleinteilungsinformationen umfasst.

6. Verwendung einer Codierungsvorrichtung nach Anspruch 1 zum Codieren von Daten, die dafür bestimmt sind, auf einem Aufzeichnungsmedium aufgezeichnet zu werden, wobei die codierten Daten, die aufgezeichnet werden sollen, die Datenpakete und die Nachrichten, die sich auf die zugeordneten Kapiteleinteilungsinformationen beziehen, umfassen.

7. Aufzeichnungsvorrichtung (10), die eine Codierungsvorrichtung nach Anspruch 1 umfasst.

8. Aufzeichnungsvorrichtung (10) nach Anspruch 7, **dadurch gekennzeichnet, dass** sie Mittel (11) zum Decodieren von Videoinformationen, die in den Speichermitteln (8) aufgezeichnet sind, und Mittel (5) zum Übertragen der Videoinformationen an Anzeigemittel (6) umfasst.

9. Videodaten-Decodierungsvorrichtung (4, 11), die Mittel zum Decodieren der Bilder, die mit der Codierungsvorrichtung nach Anspruch 1 codiert worden sind, umfasst, **dadurch gekennzeichnet, dass** sie Mittel zum Extrahieren einer Supplemental-Enhancement-Information-Nachricht, die Parameter umfasst, die die Kapiteleinteilungsinformationen repräsentieren, aus den Daten umfasst.

## Revendications

1. Dispositif d'encodage de données audio/vidéo comprenant
- des moyens (2, 11) permettant d'encoder les images en groupes de données, conformément à une norme de codage vidéo,
- des moyens permettant d'insérer dans les groupes de données encodées un message contenant des paramètres représentatifs du chapitrage des données.
**Caractérisé en ce que** ledit message est de type Information d'amélioration supplémentaire.

2. Dispositif selon la revendication 1, **caractérisé en ce que** le message de type Information d'amélioration supplémentaire comprend au moins un élément d'information parmi les suivants :
- durée du chapitre en octets,
- heure de début d'un chapitre par rapport au début des données vidéo,
ainsi que toute combinaison de ces informations.

3. Dispositif selon la revendication 1, **caractérisé en ce que** le message de type Information d'amélioration supplémentaire comprend des informations relatives au titre du chapitre.

4. Dispositif selon l'une des revendications précédentes, **caractérisé en ce que** lesdits paramètres représentatifs des informations de chapitrage comprennent également des informations relatives aux données vidéo, parmi les éléments suivants :
- acteurs du film lorsque le contenu vidéo est représentatif d'un film,
- réalisateur lorsque le contenu vidéo est représentatif d'un film,
- synopsis du chapitre,
ainsi que toute combinaison de ces informations.

5. Système de transmission des données audio/vidéo comprenant un dispositif d'encodage (2) selon les revendications 1 à 4 et des moyens (3) permettant de transmettre les données audio/vidéo avec les informations de chapitre.

6. Utilisation d'un dispositif d'encodage selon la revendication 1 permettant d'encoder les données destinées à être enregistrées sur un support d'enregistrement, lesdites données encodées comprenant les paquets de données et les messages relatifs aux informations de chapitrage associées.

7. Dispositif d'enregistrement (10) comprenant un dispositif d'encodage selon la revendication 1.

8. Dispositif d'enregistrement (10) selon la revendication 7, **caractérisé en ce qu'**il comprend des moyens (11) permettant de décoder les informations vidéo enregistrées dans les moyens de stockage (8) et des moyens (5) de transmission des informations vidéo vers des moyens d'affichage (6).

9. Dispositif de décodage des données vidéo (4, 11) comprenant des moyens permettant de décoder des images encodées à l'aide du dispositif d'encodage de la revendication 1, **caractérisé en ce qu'**il comprend des moyens permettant d'extraire un message de type Information d'amélioration complémentaire des données contenant des paramètres représentatifs des informations de chapitrage.
